Europäisches Patentamt

European Patent Office

Office européen des brevets

(11) Numéro de publication: **0 014 634**
**A1**

## DEMANDE DE BREVET EUROPEEN

(21) Numéro de dépôt: **80400138.6**

(22) Date de dépôt: **29.01.80**

(51) Int. Cl.³: **H 04 B 9/00**

(30) Priorité: **02.02.79 FR 7902794**

(43) Date de publication de la demande:
**20.08.80 Bulletin 80/17**

(84) Etats Contractants Désignés:
**AT BE CH DE GB IT LU NL SE**

(71) Demandeur: **SOURIAU & Cie (S.A.)**
**9/13, rue du Général Galliéni**
**F-92103 Boulogne-Billancourt(FR)**

(72) Inventeur: **de Mendez, Michel**
**7 Voie de l'Etoile du Mesnil**
**F-91310 Montlhery(FR)**

(72) Inventeur: **Crosnier, Jean-Jacques**
**31, Ave de la Paix**
**F-92170 Vanves(FR)**

(74) Mandataire: **Berogin, Francis**
**Société S.E.D.I.C. 21, rue Molière**
**F-92120 Montrouge(FR)**

(54) **Coupleur actif entre une ligne "bus" optique et l'un des abonnés, et ligne "bus" comportant de tels coupleurs actifs.**

(57) L'invention a pour objet un coupleur actif entre une ligne "bus" optique et des abonnés.

Il comprend un coupleur optique (1), couplant un conducteur optique émetteur (2) et un conducteur optique récepteur (3), et comprenant un dispositif de dérivation (4) laissant passer une fraction de l'énergie lumineuse incidente transmise au conducteur récepteur (3) et dérivant une autre fraction de cette énergie lumineuse incidente sur un photorécepteur (5) commandant l'injection dans le coupleur optique 1, au moyen d'un photoémetteur (10), d'énergie lumineuse transmise au conducteur récepteur (3), en restauration du niveau.

Un commutateur (8, 9) commande le fonctionnement du photoémetteur (10) et peut lui-même être commandé par le photorécepteur 5 ou par un signal d'entrée émis en (14) par l'abonné.

Application à la transmission d'informations digitales à des abonnés au moyen d'une ligne "bus" optique.

FIG.1

EP 0 014 634 A1

1

## COUPLEUR ACTIF ENTRE UNE LIGNE "BUS" OPTIQUE ET L'UN DES ABONNES, ET LIGNE "BUS" COMPORTANT DE TELS COUPLEURS ACTIFS

L'invention concerne un coupleur actif entre une ligne "bus" optique et des abonnés, et a plus particulièrement pour objet un coupleur de ce type pour ligne "bus" optique, transmettant des informations sous forme digitale, ainsi qu'une ligne "bus" comportant de tels coupleurs actifs.

Par ligne "bus" optique, on entend une ligne de transmission d'informations par conducteurs optiques, desservant un certain nombre d'abonnés en parallèle au moyen de coupleurs grâce auxquels chacun des abonnés est également susceptible de recevoir des informations en provenance d'une source ou d'autres abonnés, que d'émettre en direction de cette source ou des autres abonnés. Dans le cas d'un coupleur unidirectionnel, un abonné ne peut recevoir d'informations qu'en provenance de la source ou des abonnés d'amont, situés entre la source et lui sur la ligne "bus", et ne peut émettre qu'en direction des abonnés d'aval, alors que dans le cas d'un coupleur "bi-directionnel", chaque abonné peut recevoir des informations en provenance de tout autre abonné, et émettre à son intention, quelle que soit sa position sur la ligne "bus". Les conducteurs optiques utilisés pour constituer la ligne peuvent être des conducteurs monobrins ou multibrins. On connait déjà des lignes "bus" optiques sur lesquelles, au niveau de chaque abonné, un coupleur optique assure le couplage d'un conducteur optique émetteur avec un conducteur optique récepteur, qui reçoit une fraction transmise, du signal lumineux incident émis par le conducteur émetteur, le coupleur optique étant muni d'un dispositif de dérivation

2

d'une fraction du signal lumineux incident, afin d'assurer la réception par l'abonné d'un signal de sortie constitué par ou proportionnel à cette fraction dérivée.

Les brevets US 3,870,396 - 3,870,398 - 3,874,779 et la demande de brevet français 2 344 855 ont notamment pour objet de tels coupleurs optiques, dont le dispositif de dérivation se présente sous la forme d'un système optique semi-réfléchissant, constitué, soit de prismes avec interposition de lame (s) interfaciale (s) et/ou de dioptre (s) air-verre, et éventuellement avec un cône mélangeur, soit de barreaux optiques couplés obliquement, et dont les faces des coupes sont partiellement et sélectivement métallisées, pour constituer des miroirs de dérivation et/ou d'injection de lumière hors du ou dans le coupleur optique, la dérivation et l'injection pouvant être assurée chacune sur l'une des deux faces réfléchissantes d'un même miroir ou bien l'une sur un premier miroir et l'autre sur un second miroir, les deux miroirs étant décalées longitudinalement dans le coupleur optique.

Les systèmes optiques semi-réfléchissants de ces coupleurs optiques sont ainsi susceptibles, soit d'être traversés par une fraction transmise au conducteur optique aval d'un signal lumineux incident, lorsqu'un tel signal lumineux incident est transporté par le conducteur optique amont, et simultanément, de dériver, par réflexion, une autre fraction dérivée du signal lumineux incident, laquelle fraction dérivée peut être reçue par une photodiode, soit d'assurer l'injection, dans le conducteur optique aval, d'un signal lumineux émis par une diode électroluminescente, et correspondant à un signal d'entrée émis par

0014634

3

l'abonné.

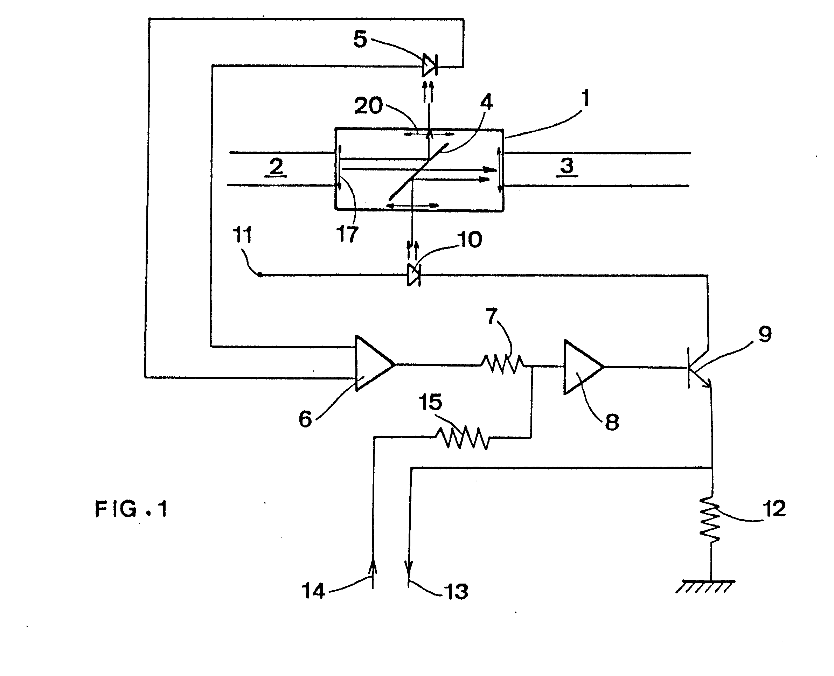

Par les articles intitulés "simple coupleur taps fiber optic cables" de la revue Electronics du 20 Décembre 1973, page 3, et "Data busing with fiber optics" de la revue Naval Research Reviews vol. 28, n° 2 pages 12 à 25 de Février 1975, ainsi qu'en référence à la figure 1 de l'article "Fibernet : Multimode Optical Fibers for local computer Networks" de la revue IEEE - Transactions on communications - Vol. com 26 n° 7 de Juillet 1978, pages 983 à 990, il a déjà été proposé d'utiliser de tels coupleurs optiques au sein de coupleurs actifs entre une ligne "bus" optique et des abonnés, la photodiode, connectée à un préamplificateur, dont la sortie est reliée à l'entrée d'un amplificateur à seuil, commandant un dispositif de commutation, pour assurer la réception, par l'abonné, d'un signal de sortie, et la diode électroluminescente étant toutes deux disposées directement au niveau du coupleur, et non reliées à ce dernier par des fibres optiques.

Ces lignes "bus" optiques connues présentent l'inconvénient que la dérivation d'une fraction du signal incident, au niveau de chaque coupleur actif, entraîne une perte de puissance du signal optique circulant dans la ligne. Les pertes d'insertion d'un coupleur optique étant par exemple de l'ordre de 3 décibels (db), on imagine aisément les difficultés présentées à la réception au niveau du dixième abonné consécutif sur la ligne, qui reçoit l'information à un niveau inférieur de 30 db de celui auquel le premier abonné reçoit l'information.

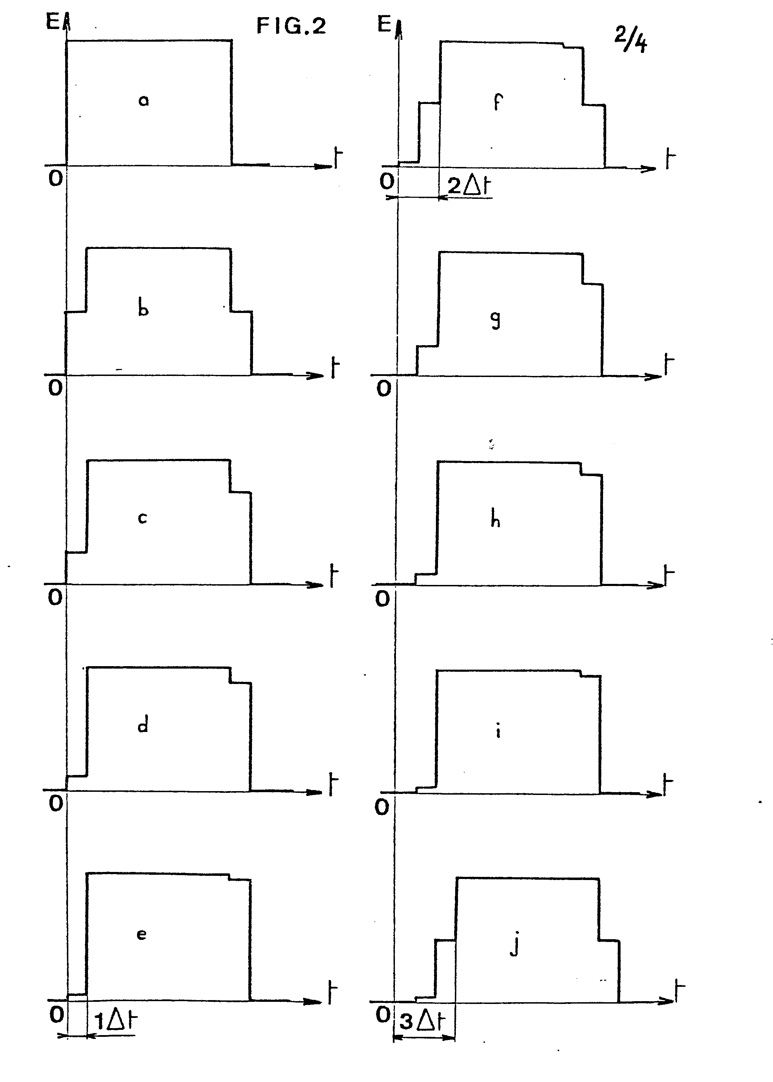

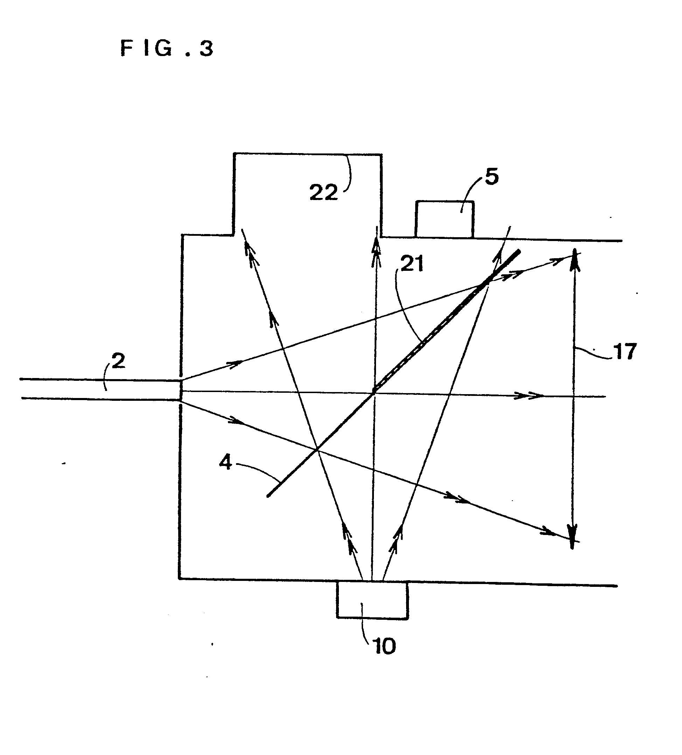

Pour pallier cet inconvénient, il a déjà été proposé, comme cela apparaît dans l'article précité "Fiberner : Multimode Optical Fibers for Local Computer Networks",

4

en référence aux figures 2 et 3, d'équiper la ligne "bus" optique, au niveau de chaque abonné, d'un répéteur interrompant le trajet optique, et constitué d'une photodiode, située en bout du conducteur optique amont, recevant tout ce signal lumineux incident, et délivrant un signal électrique qui, correctement amplifié, est amené à l'entrée d'un premier dispositif de commutation, à la sortie duquel on dispose d'un signal de sortie à l'intention de l'abonné, et, simultanément, à l'entrée d'un second dispositif de commutation, susceptible de recevoir également un signal d'entrée, convenablement amplifié, en provenance de l'abonné, pour commander une diode électroluminescente injectant dans le conducteur optique aval un signal lumineux destiné aux abonnés d'aval sur la ligne "bus". De tels répéteurs pour ligne "bus" sont également connus par l'article intitulé "A 274-Mb/s optical repeater experiment employing a GaAs laser" de la revue Proceedings of the IEEE, vol. 61 n° 10 d'Octobre 1973, pages 1504 à 1505, ainsi que de la demande de brevet allemand n° 2 318.933.

Mais ces lignes "bus" à répéteurs présentent un autre inconvénient, qui est de rendre impossible toute transmission, en cas de panne d'un seul répéteur.

Par la présente invention, on se propose de remédier à ces inconvénients au moyen d'un coupleur actif du type présenté ci-dessus, n'interrompant pas définitivement la transmission en cas de panne, et n'occasionnant, de plus, aucune perte de puissance pour la transmission lorsqu'il fonctionne dans des conditions normales.

A cet effet, le coupleur actif selon l'invention, du type présenté ci-dessus, se caractérise en ce que la détection, par la photodiode     , de la fraction dé-

5

rivée du signal lumineux incident commande, par l'intermédiaire du dispositif de commutation, une réinjection dans le coupleur optique , par la diode électroluminescente , d'un signal lumineux communiqué au conducteur optique aval , et s'ajoutant à la fraction transmise du signal lumineux incident, pour restaurer le niveau du signal lumineux reçu par le conducteur optique aval.

Il faut remarquer que cette restauration est obtenue sans démodulation ni autre traitement de la fraction transmise du signal lumineux incident.

Dans une forme préférée de réalisation, le dispositif de commutation, commandé par la photodiode et commandant l'émission de la diode électroluminescente , est également commandé par le signal d'entrée émis par l'abonné, de sorte que la chaîne de traitement électronique de traitement des signaux électriques de sortie, vers l'abonné, et d'entrée, émis par l'abonné, comporte un nombre limité de composants.

Avantageusement, la diode électroluminescente, reliée à une alimentation par sa borne d'entrée, est reliée par sa borne de sortie au collecteur d'un transistor que comporte le dispositif de commutation, et dont la base est reliée, à la sortie de l'amplificateur à seuil , dont l'entrée est également susceptible de recevoir le signal d'entrée émis par l'abonné, de sorte qu'un signal de sortie vers l'abonné et un signal lumineux réinjecté, ou un signal lumineux injecté par l'abonné, dont les niveaux sont indépendants, respectivement, du niveau du signal lumineux incident, et du niveau du signal d'entrée émis par l'abonné, soient disponibles respectivement à l'émetteur du transistor et dans le conducteur

6

optique aval , lorsque le transistor conduit, ce qui se produit lorsque sa base reçoit un signal échelon délivré par l'amplificateur , dès que le signal reçu par ce dernier est supérieur au seuil.

Dans une forme simple de réalisation du dispositif de dérivation, le système optique semi-réfléchissant comprend une première lame semi-réfléchissante , inclinée sur l'axe longitudinal du coupleur optique, et dont seule la face tournée vers le conducteur optique amont est partiellement métallisée pour masquer la diode électroluminescente à la photodiode.

Dans le cas d'un coupleur bi-directionnel, muni d'un système optique semi-réfléchissant double, associé à une seconde photodiode et une seconde diode électroluminescente, le système optique semi-réfléchissant comprend une seconde lame semi-réfléchissante semblable à la première , les deux lames étant décalées longitudinalement dans le coupleur optique , et chacune présentant sa face partiellement métallisée tournée vers l'extrémité la plus proche du coupleur optique.

Cependant, dans une forme préférée de réalisation de coupleur actif bi-directionnel, ne comprenant qu'une seule photodiode et une seule diode électroluminescente, le coupleur optique comprend un dispositif de dérivation réalisé sous la forme d'un système optique croisé, constitué d'une seconde lame semi-réfléchissante analogue à la première et croisée avec celle-ci de sorte que chacune des deux lames soit susceptible, d'une part, de réfléchir vers la photodiode la fraction dérivée du signal lumineux incident émis par l'un des conducteurs optiques, d'autre part, d'être traversée par la fraction du signal lumineux incident directement transmis à l'autre conducteur optique, et enfin, d'assurer l'injection dans cet autre conducteur optique du signal lumineux émis par la diode électroluminescente.

La présente invention sera mieux comprise à l'aide d'exemples particuliers de réalisation qui seront ci-après décrits, à titre non limitatif, en référence aux figures en annexe dans lesquelles :

- la figure 1 représente, de façon schématique, un coupleur actif unidirectionnel selon l'invention.

- la figure 2 représente un chronogramme donnant l'évolution d'un signal incident de type échelon, au travers de coupleurs actifs successifs selon la figure 1.

- la figure 3 représente, de façon partielle et schématique, un coupleur optique pour coupleur actif selon la figure 1, aménagé pour empêcher tout verrouillage du coupleur actif sur lui-même.

- et les figures 4, 5 et 6 représentent de façon partielle et schématique trois modes de réalisation de coupleurs actifs bi-directionnels selon l'invention, les représentations étant limitées aux coupleurs optiques et aux éléments qui leur sont adjacents, et les éléments non représentés étant identiques aux éléments correspondants sur la figure 1.

En référence à la figure 1, le coupleur actif unidirectionnel comprend un coupleur optique (1) interposé entre un conducteur optique amont (2) et un conducteur optique aval (3) d'une ligne "bus" optique. Le coupleur optique (1) est muni d'un dispositif de dérivation constitué d'une lame semi-réfléchissante (4), traversée par une fraction de la lumière émise par le conducteur optique amont (2), qui se trouve ainsi directement transmise au conducteur optique aval (3), et assurant par réflexion, la dérivation d'une autre fraction de

8

la lumière émise, sur une photodiode (5), par exemple de type P.I.N.

En supposant que la puissance du signal lumineux incident émis par le conducteur amont (2) soit égale à l'unité, la puissance du signal transmis au conducteur récepteur (3) a une valeur x inférieure à 1, et la puissance réfléchie sur la photodiode (5) est 1-x, si l'on néglige les pertes par absorption dans le coupleur optique. On dispose ainsi, aux bornes de la photodiode (5), d'un signal électrique "e" proportionnel à 1-x, qui est amplifié par un préamplificateur 6, dont les deux bornes d'entrées sont reliées aux bornes de la photodiode (5), si le signal électrique élaboré par la photodiode (5) est d'un niveau tombant dans la plage dynamique du préamplificateur (6). Si Y est la limite inférieure de la plage dynamique du préamplificateur (6), le signal "e" élaboré par la photodiode (5) sera amplifié en "E" par le préamplificateur (6) à la condition que "e" soit supérieur à Y. Le signal électrique amplifié E disponible sur la borne de sortie du préamplificateur (6) est alors transmis, au travers d'une résistance (7), à la borne d'entrée d'un amplificateur à seuil (8), fonctionnant en comparateur, lequel délivre un signal de sortie échelon si son signal d'entrée est supérieur au seuil, et ne délivre aucun signal de sortie si son signal d'entrée est inférieure au seuil. La borne de sortie de l'amplificateur 8 est reliée à l'électrode de commande d'un transistor (9), fonctionnant en commutation, ce transistor (9) pouvant être de type bipolaire ou de type à effet de champ. Pour la suite de la description, on considèrera qu'il s'agit d'un transistor bi-polaire, la transposition au cas d'un transistor à effet de champ s'effectuant de façon en

9

soi bien connue. Le transistor bi-polaire (9) est
ainsi relié par sa base à l'amplificateur (8), et par
son collecteur à la borne de sortie d'une diode électroluminescente rapide 10, alimentée par sa borne
d'entrée reliée à une source d'alimentation électrique (11) à un potentiel positif, tandis que l'émetteur
du transistor (9) est relié à la masse par une résistance (12). Le transistor (9) fonctionne en régime
saturé et bloqué lorsque sa base reçoit un signal
échelon provenant de l'amplificateur (8). Dans cette
configuration, le transistor (9) est conducteur, et
la diode électroluminescente (10) est traversée par
un courant électrique, dont l'intensité dépend de la
tension d'alimentation disponible en (11), la lumière
émise par la diode électroluminescente (10) étant injectée dans le coupleur optique (1), où la lame semi-
réfléchissante la réfléchit vers le conducteur optique
aval (3), tandis que l'on dispose, à l'émetteur du
transistor (9), d'un signal de sortie, à l'intention
de l'abonné, auquel ce signal est transmis par la ligne électrique (13). Par la ligne (14), l'abonné peut
également envoyer un signal d'entrée sur la borne
d'entrée de l'amplificateur (8), au travers d'une résistance (15), afin de rendre conducteur le transistor (9), et d'injecter dans le conducteur optique
aval (3) un signal lumineux émis par la diode électroluminescente (10). L'amplificateur (8) et le transistor (9) constituent ainsi un commutateur commandé,
soit par la photodiode (5), pour ouvrir ou fermer
l'émission lumineuse de la diode électroluminescente
(10) vers le conducteur optique aval (3), afin de
restaurer le niveau du signal lumineux transmis par
ce conducteur vers les autres abonnés en aval, et afin
de transmettre à l'abonné un signal de niveau constant

10

indépendant du niveau du signal lumineux émis par le conducteur optique amont (2), soit par le signal électrique d'entrée émis par l'abonné par la ligne (14), pour injecter dans le conducteur optique aval (3), un signal lumineux destiné aux autres abonnés et d'un niveau constant. En effet, si le signal électrique e, correspondant à la fraction dérivée (1-x) de l'énergie lumineuse incidente, et élaboré par la photodiode (5), est supérieur à Y, limite inférieure de la plage dynamique du préamplificateur (6), l'amplificateur (8) envoie un signal échelon sur la base du transistor (9) et rend ce dernier conducteur. La ligne (13) est alors portée à un potentiel constant, indépendant de la fraction dérivée (1-x) du signal lumineux incident, et ne dépendant que de la tension d'alimentation en 11 et des résistances internes de la diode (10) et au transistor (9), de même que le signal lumineux injecté par la diode électroluminescente (10) dans le coupleur optique (1), et réfléchi par la lame semi-réfléchissante (4) dans le conducteur aval (3), est d'un niveau Z indépendant de la fraction dérivée (1-x). Dans le conducteur optique aval, le signal lumineux injecté, de niveau Z, vient s'ajouter à la fraction transmise x du signal lumineux incident, ce qui procure une restauration du niveau du signal lumineux acheminé vers les autres abonnés.

Il est avantageux de choisir les composants (9) et (10) et la tension d'alimentation en (11) pour que Z soit égal à 1-x, de sorte que la puissance du signal lumineux transmis tout au long de la ligne "bus" soit égale à l'unité, en l'absence de panne. Si le coupleur actif d'ordre n-1 sur la ligne "bus" tombe en panne, c'est-à-dire s'il ne procure pas de restauration du niveau du signal lumineux transmis, le signal lumineux incident reçu par le coupleur optique d'ordre n est de niveau x. La fraction transmise dans le coupleur optique d'ordre n est $x^2$ tandis que la fraction réfléchie est $x(1-x)$. Si l'ordre électrique élaboré par la photodiode (5) est supérieur à Y, il y aura réinjection d'un signal lumineux de niveau Z = $1-x$, de sorte que le signal émis par le conducteur optique reliant le coupleur actif d'ordre n au coupleur actif d'ordre n+1 sera d'un niveau $Z+x^2$, soit $1-x+x^2$. Au fur et à mesure du passage dans des coupleurs d'ordre plus élevé, le niveau du signal lumineux transporté sera restauré asymptotiquement vers le niveau unité, selon la série $1-(1-x) x^P$, p étant l'ordre du coupleur actif après celui qui se trouve en panne.

De même, si un abonné envoie un signal d'entrée sur la ligne 14 de son coupleur actif, il y a injection d'un signal lumineux de niveau $Z=1-x$ vers l'abonné suivant, dont le coupleur optique transmet une fraction $x(1-x)$, restaurée par injection d'un nouveau signal de niveau $1-x$, soit au total $x(1-x)+1-x= 1-x^2$. Après le coupleur d'ordre p suivant l'abonné ayant émis un signal d'entrée, le signal lumineux transporté par la ligne "bus" aura le niveau $1-x^{p+1}$, selon une série convergent vers la valeur unité.

En pratique, si chaque coupleur développe une perte totale d'insertion de 3 db, ce qui correspond à x=0,5 et si la plage dynamique du préamplificateur (6) est légèrement supérieure à 12 db, valeur correspondant au seuil de comparaison de l'amplificateur (8), on obtient une ligne "bus" sur laquelle trois coupleurs actifs successifs peuvent être en panne, sans que la transmission ne soit interrompue, et à la suite desquels le signal lumineux transmis sera régénéré et restauré.

Cependant, il est à noter que la probabilité d'avoir trois coupleurs actifs successifs en panne est faible. En ce qui concerne l'élargissement d'un signal lumineux incident, introduit, au passage dans chaque coupleur actif, par le temps de réponse de la chaîne électronique comportant la photodiode (5), le préamplificateur (6), le commutateur constitué de l'amplificateur (8) et le transistor (9), ainsi que la diode électroluminescente (10), il apparaît que son influence est limitée du fait de la présence d'un seuil minimal à détecter pour déclencher une réinjection par la diode électroluminescente (10), le choix de ce seuil fixant, comme déjà dit par ailleurs, le nombre possible de coupleurs actifs successifs en panne, compte tenu de la plage dynamique d'entrée du préamplificateur (6). La figure 2 représente l'évolution d'un signal lumineux incident, du type échelon, au passage dans des coupleurs actifs successifs, en reprenant le cas d'un taux de transmission x de 0,5, ce qui autorise 3 coupleurs successifs en panne, et pour un seuil minimum à détecter légèrement inférieur à $(0,5)^4$, soit 0,0625. L'évolution du signal échelon incident, qui est représenté sur la figure 2a, est donnée par les figures 2b, 2c, 2d, etc., qui représentent respectivement le signal à la sortie du coupleur d'ordre 1, 2, 3, etc. Pour un signal incident de niveau d'énergie E égal à l'unité, la réinjection d'énergie lumineuse par les coupleurs d'ordre 1, 2, 3 et 4 est déclenchée par le signal dérivé sur la photodiode (5) de chacun des coupleurs, et reçu respectivement à des niveaux de 0,5; 0,25; 0,125 et 0,0625, qui sont supérieurs au seuil. Le déclenchement de la réinjection se fait donc sur le signal incident initial, et les signaux

13

régénérés des coupleurs 1 , 2 , 3 et 4 sont tous décalés du même temps t par rapport au signal incident initial, les retards ne s'ajoutant donc pas.

A partir du 5ème coupleur, le déclenchement de la réinjection se fait sur le signal régénéré par les coupleurs d'ordre 1 , 2 , 3 et 4 et ce jusqu'au 8ème coupleur, tandis que le signal initial devient négligeable.

On constate qu'en fait, l'élargissement d'un signal sous forme d'impulsion est fixé par le temps de réponse $\Delta t$ d'un seul coupleur, et que cette impulsion se décale dans le temps par saut de $\Delta t$ tous les 4 coupleurs dans l'exemple considéré. Ce décalage assimilable à un temps de transit n'est pas préjudiciable à la qualité de la transmission. On peut donc associer un grand nombre de coupleurs actifs, tout en conservant une bonne transmission par la ligne "bus". Comme cela est représenté sur la figure 3, pour que la photodiode (5) ne soit pas aveuglée par la lumière émise par la diode électroluminescente (10), ce qui verrouillerait le système en le bouclant sur lui-même, la face de la partie (21) de la lame (4), tournée vers le conducteur optique amont (2) est métallisée, de sorte que la face de cette partie (21) tournée vers le conducteur optique aval (3) est entièrement réfléchissante pour la fraction qu'elle reçoit de la lumière émise par la diode électroluminescente (10), la fraction de la lumière émise par cette dernière et traversant l'autre partie, non métallisée, de la lame (4) étant absorbée dans une cavité intérieurement noircie (22), ménagée dans le corps du coupleur optique, qui, sur la figure 2, est représenté muni d'une lentille (17) en position centrale, les divers faisceaux de lumière, tant émis

14

par le conducteur optique amont (2) et par la diode électroluminescente (10), que réfléchis ou transmis par la lame semi-réfléchissante (4) étant divergents, alors que sur la figure 1, le coupleur (1) est traversé de faisceaux parallèles, puisque les lentilles (17) sont disposées aux entrées et sorties optiques du coupleur (1).

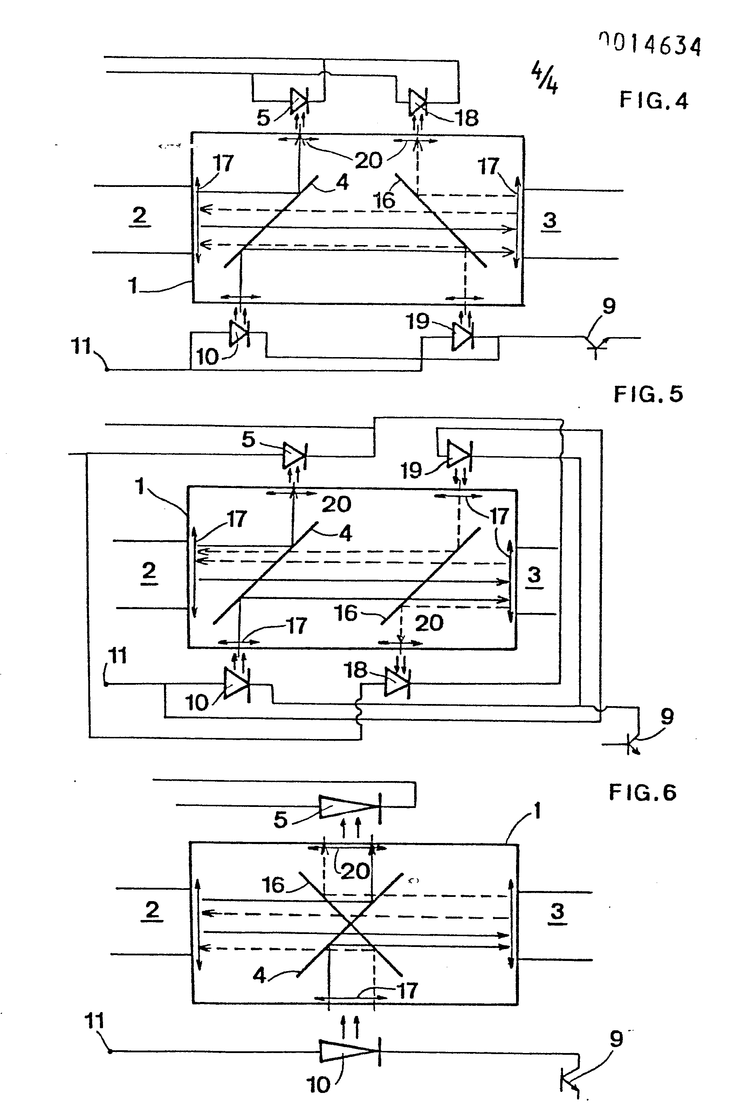

Sur les figures 4, 5 et 6, ont été représentés trois modes de réalisation de coupleurs optiques (1) associés aux composants tels que photodiodes (5) et diodes électroluminescentes (10) qui leurs sont adjacents dans des coupleurs actifs bi-directionnels selon l'invention, les composants non représentés étant identiques aux composants correspondants sur la figure 1.

Dans de tels coupleurs actifs bi-directionnels, les coupleurs optiques assurent la liaison entre deux conducteurs optiques (2) et (3) pouvant être alternativement le conducteur amont et le conducteur aval.

Dans un but de clarté de la représentation schématique, les chemins optiques dans les coupleurs optiques (1) ont été exagérément excentrés.

Le dispositif de dérivation du coupleur optique (1) de la figure 4 est constitué de deux lames semi-réfléchissantes (4) et (16), identiques et sélectivement métallisées, susceptible de recevoir respectivement des conducteurs optiques (2) et (3) un faisceau lumineux rendu parallèle au moyen des lentilles (17) disposées à la liaison entre le coupleur optique (1) et chacun des conducteurs (2) et (3). Les lames (4) et (16) sont inclinées l'une vers l'autre de sorte que la première puisse réfléchir une fraction de la lumière incidente émise par le conducteur (2) vers la photodiode (5), transmettre au conducteur (3) une autre fraction de cette lumière incidente, et

15

enfin, injecter par réflexion dans le conducteur (3) un signal lumineux de restauration issu de la diode électroluminescente (10), lorsque, comme précédemment expliqué, le signal électrique disponible aux bornes de la photodiode (5) aura, après amplification, commandé la commutation du commutateur constitué par l'amplificateur (8) et le transistor (9). De façon symétrique, la lame (16) peut réfléchir vers une photodiode (18) identique à (5) et montée en parallèle avec cette dernière, une fraction dérivée du faisceau incident émis par le conducteur (3), transmettre directement au conducteur (2) une autre fraction du faisceau incident, et enfin, réinjecter par réflexion dans le conducteur (2) un signal lumineux de restauration émis par une diode électroluminescente (19), identique à (10) et montée en parallèle avec cette dernière entre la borne d'alimentation (11) et le collecteur du transistor (9).

D'autres lentilles (20) seront avantageusement prévues pour focaliser sur les photodiodes (5) et (18) l'énergie lumineuse réfléchie par les lames (4) et (16).

Le dispositif représenté sur la figure 5 ne diffère de celui précédemment décrit que par le fait que les deux lames semi-réfléchissantes (4) et (16) sont parallèles, ce qui conduit à inverser les positions de la photodiode (18) et de la diode électroluminescente (19) par rapport au coupleur optique (1), le fonctionnement restant identique.

Dans une forme préférée de réalisation de coupleur actif bi-directionnel, le coupleur optique (1) est, comme cela est représenté sur la figure 6, équipé d'un système optique croisé constitué des deux lames semi-réfléchissantes (4) et (16), susceptibles de

16

réfléchir une fraction dérivée du faisceau lumineux incident vers une unique photodiode (5), selon que le conducteur optique émetteur est (2) ou (3), transmettant toutes deux une autre fraction du faisceau incident vers le conducteur récepteur, et toutes deux susceptibles d'injecter, dans le conducteur récepteur, un faisceau de restauration de niveau émis par une unique diode électroluminescente (10).

L'aspect extérieur d'un coupleur actif selon l'invention, équipant une ligne "bus" constitué de conducteurs optiques monobrins ou multibrins, sera celui d'un boîtier raccordé par deux faces opposées aux deux conducteurs optiques couplés, et muni, sur une autre de ses faces, d'un connecteur électrique recevant un conducteur électrique à plusieurs fils, pour assurer l'alimentation des amplificateurs (8), préamplificateur (7) et de la borne (11), pour donner la masse, et pour permettre l'entrée et la sortie des signaux pour l'abonné.

L'invention a également pour objet une ligne "bus" optique, comprenant des coupleurs actifs selon la description précédente, en nombre aussi élevé que désiré, et permettant, en cas de panne d'un ou de plusieurs coupleurs, de continuer à assurer le service des autres abonnés.

0014634

17

<u>R E V E N D I C A T I O N S</u>

1/ Coupleur actif entre une ligne "bus" optique et un des abonnés à la ligne, comprenant un coupleur optique (1), destiné à coupler un conducteur optique amont (2) et un conducteur optique aval (3), et muni d'un système optique semi-réfléchissant, susceptible, soit d'être traversé par une fraction transmise au conducteur optique aval (3) d'un signal lumineux incident, lorsqu'un tel signal lumineux incident est transporté par le conducteur optique amont (2), et, simultanément, de dériver, par réflexion, une autre fraction du signal lumineux incident, laquelle fraction dérivée est reçue par une photodiode (5) connectée à un préamplificateur (6), dont la sortie est reliée à l'entrée d'un amplificateur à seuil (8) commandant un dispositif de commutation, pour assurer la réception, par l'abonné, d'un signal de sortie (13), soit d'assurer l'injection, dans le conducteur optique aval (3), d'un signal lumineux émis par une diode électroluminescente (10), et correspondant à un signal d'entrée (14) émis par l'abonné, caractérisé en ce que la détection, par la photodiode (5), de la fraction dérivée du signal lumineux incident commande, par l'intermédiaire du dispositif de commutation, une réinjection dans le coupleur optique (1), par la diode électroluminescente (10), d'un signal lumineux communiqué au conducteur optique aval (3), et s'ajoutant à la fraction transmise du signal lumineux incident, pour restaurer le niveau du signal lumineux reçu par le conducteur optique aval (3).

2/ Coupleur actif selon la revendication 1, caractérisé en ce que le dispositif de commutation, commandé par la photodiode (5) et commandant l'émission de la diode électroluminescente (10), est également

18

ment commandé par le signal d'entrée (14) émis par l'abonné.

3/ Coupleur actif selon la revendication 2, caractérisé en ce que la diode électroluminescente (10), reliée à une alimentation (11) par sa borne d'entrée, est reliée par sa borne de sortie au collecteur d'un transistor (9) que comporte le dispositif de commutation, et dont la base est reliée, à la sortie de l'amplificateur à seuil (8), dont l'entrée est également susceptible de recevoir le signal d'entrée (14) émis par l'abonné, de sorte qu'un signal de sortie (13) vers l'abonné et un signal lumineux réinjecté, ou un signal lumineux injecté par l'abonné, dont les niveaux sont indépendants, respectivement, du niveau du signal lumineux incident, et du niveau du signal d'entrée (14) émis par l'abonné, soient disponibles respectivement à l'émetteur du transistor (9) et dans le conducteur optique aval (3), lorsque le transistor (9) conduit, ce qui se produit lorsque sa base reçoit un signal échelon délivré par l'amplificateur (8), dès que le signal reçu par ce dernier est supérieur au seuil.

4/ Coupleur actif selon l'une des revendications 1 à 3, caractérisé en ce que le système optique semi-réfléchissant comprend une première lame semi-réfléchissante (4), inclinée sur l'axe longitudinal du coupleur optique, et dont seule la face tournée vers le conducteur optique amont (2) est partiellement métallisée (21) pour masquer la diode électroluminescente (10) à la photodiode (5).

5/ Coupleur actif selon la revendication 4, dont le système optique semi-réfléchissant est double, et se trouve associé à une seconde photodiode (18) et à une seconde diode électroluminescente (19), de sorte que le coupleur actif (1) soit bi-directionnel, les deux conducteurs optiques pouvant alternativement être l'un le conducteur optique amont (2) et l'autre le conducteur optique aval (3), caractérisé en ce que le système optique semi-réfléchissant comprend une seconde lame semi-réfléchissante (16) semblable à la première (4), les deux lames étant décalées longitudinalement dans le coupleur optique (1), et chacune présentant sa face partiellement métallisée (21) tournée vers l'extrémité la plus proche du coupleur optique (1).

6/ Coupleur actif selon la revendication 5, caractérisé en ce que les deux lames (4 et 16) sont, de plus, inclinées l'une sur l'autre.

7/ Coupleur actif selon la revendication 6, caractérisé en ce que les deux lames (4 et 16) sont parallèles l'une à l'autre.

8/ Coupleur actif selon l'une des revendications 1 à 4, caractérisé en ce que le coupleur optique (1) comprend un dispositif de dérivation réalisé sous la forme d'un système optique croisé, constitué d'une seconde lame semi-réfléchissante (16) analogue à la première (4) et croisée avec celle-ci de sorte que chacune des deux lames (4 et 16) soit susceptible, d'une part, de réfléchir vers la photodiode (5) la fraction dérivée du signal lumineux incident émis par l'un des conducteurs optiques, d'autre part, d'être traversée par la fraction du signal lumineux incident directement transmis à l'autre conducteur optique, et enfin, d'assurer l'injection dans cet autre conducteur optique du signal lumineux émis par la diode électroluminescente (10).

9/ Ligne "bus" optique, caractérisée en ce qu'elle comprend des coupleurs actifs selon l'une des revendications 1 à 8.

FIG.1

FIG.2

2/4

n014634

FIG.3

FIG. 5

FIG. 6

**Office européen des brevets**

**RAPPORT DE RECHERCHE EUROPEENNE**

ꓵ014634

Numéro de la demande

EP 80 40 0138

| Catégorie | Citation du document avec indication, en cas de besoin, des parties pertinentes | Revendication concernee | CLASSEMENT DE LA DEMANDE (Int. Cl. 3) |
|---|---|---|---|
| **DOCUMENTS CONSIDERES COMME PERTINENTS** | | | |
| | FR - A - 2 345 015 (PATELHOLD)  * Page 3, ligne 7 - page 4, ligne 7 *  -- | 1,2 | H 04 B 9/00 |
| D | PROCEEDINGS OF THE IEEE, vol. 61, no. 10, octobre 1973 New York US GOELL: "A 274-M6/s optical repeater experiment employing a GaAs laser", pages 1504 et 1505  * Page 1504, figure 1 *  -- | 3 | |
| D | US - A - 3 870 396 (RACKI)  * Colonne 4, lignes 5-33 *  -- | 1,4 | **DOMAINES TECHNIQUES RECHERCHES (Int. Cl. 3)**  H 04 B 9/00 H 04 L 25/52 11/16 |
| D | NAVAL RESEARCH REVIEWS, vol. 28, no. 2, février 1975, Arlington US H.F. TALOR et al.: "Data Busing with Fiber Optics", pages 12-25  * Page 23, premier paragraphe *  -- | 5,6 | |
| D | ELECTRONICS, vol. 46, 20 décembre 1973, New York US "Simple coupler taps fiber-optic cables", pages 30 et 31  * Figure unique *  ---- | | **CATEGORIE DES DOCUMENTS CITES**  X: particulièrement pertinent A: arrière-plan technologique O: divulgation non-écrite P: document intercalaire T: théorie ou principe à la base de l'invention E: demande faisant interference D: document cité dans la demande L: document cité pour d'autres raisons  &: membre de la même famille, document correspondant |

Le présent rapport de recherche a été établi pour toutes les revendications

| Lieu de la recherche | Date d'achevement de la recherche | Examinateur |
|---|---|---|
| La Haye | 12-05-1980 | GEISLER |

OEB Form 1503.1  06.78